# EUROPEAN PATENT APPLICATION

(11) **EP 2 626 836 A1**
(43) Date of publication of application: **14.08.2013**
(21) Application number: 12154950.5
(22) Date of filing: 10.02.2012
(51) Int. Cl.: G06T 11/00, G09G 5/34

(54) **Method, apparatus and computer readable medium carrying instructions for mitigating visual artefacts**

(71) Applicant: Research In Motion Limited, Waterloo, ON N2L 3W8 (CA)
(72) Inventor: Wasberger, Emil Alexander, 21140 Malmö (SE); Hallerström Sjöstedt, Svante Magnus Ulfstand, 21140 Malmö (SE); Gärdenfors, Dan Zacharias, 21140 Malmö (SE)
(74) Representative: Finnie, Peter John

(57) **Abstract**

The application discloses a method of controlling frame data to be fed to a display device, comprising: controlling one or more processors of an electronic device to produce frame data in which the contrast of a region of the image represented by the frame data is adjusted responsive to: animation of that region of the image; and an indication that the contrast of the region should be adjusted during animation.

## Description

### TECHNICAL FIELD

The disclosure relates generally to methods of controlling the generation of frame data in electronic devices for displaying images on a display and to electronic devices and computer readable media for carrying out said methods. In particular, the disclosure relates to methods of controlling the generation of frame data to reduce the perceived appearance of visual artefacts on the display displaying the frame data.

### BACKGROUND

Digitally controlled displays usable in conjunction with electronic devices to display digitally produced images and videos provided as visual data fed to the display by the electronic devices have become widely adopted. These displays, such as thin film transistor liquid crystal displays (TFT-LCD) provide very high resolution rendering of text, graphics and video information. The visual data may be provided to the display as a matrix of frame data that addresses individual pixels of the display screen and is used to control colour and intensity of each pixel. Other control data may be provided to the display to generate the image. The displays are periodically refreshed, typically at a rate of at least 50Hz, to update the display with newly received frame data, and to achieve, for example, animation of images on the display. In this way, a user of an electronic device may, for example, be provided with a graphical user interface usable in the control of the device.

Since these digital displays can crisply render high resolution images, videos and computer graphics, they are susceptible to disturbances and visual artefacts being perceptible to viewers of the image data displayed on the screens. These artefacts can originate from the production of the frame data itself and are undesirable as they can be uncomfortable and distracting for the viewer.

Efforts are ongoing to improve the operation of these electronic devices and displays to provide a high quality user experience.

### BRIEF DESCRIPTION OF THE DRAWINGS

The present disclosure and the embodiments set out herein can be better understood by reference to the description of the embodiments set out below, in conjunction with the appended drawings which can be described as follows.
Figure 1 is a block diagram illustrating an electronic device configured in accordance with example embodiments.
Figures 2A-C show an illustration of a method of controlling the production of frame data in accordance with one embodiment.
Figure 3 shows the application of an edge detector using a Sobell operator to the frame data shown in Figure 2A.
Figure 4 is a process flow diagram illustrating a method in accordance with one embodiment.
Figures 5A and 5B show detailed views of the screen grabs shown in Figures 2A and 2B, respectively.

### DESCRIPTION OF THE EMBODIMENTS

In embodiments, there is provided a method of controlling frame data to be fed to a display device, comprising: controlling one or more processors of an electronic device to produce frame data in which the contrast of a region of the image represented by the frame data is adjusted responsive to: animation of that region of the image; and an indication that the contrast of the region should be adjusted during animation. Thus in this way, visual artefacts, particularly temporal visual artefacts, that would otherwise result from high contrast regions of frame data being animated on a display in a particular way can be avoided. It has been realised during development of the present disclosure that visual artefacts can result from animation of certain regions of high contrast image data. Such artefacts can be moiré patterns and apparent flickering. It is thought that the visual artefacts result from the response time of displays to change from light to dark and back, and from display-pixel sampling and conversion that is performed from virtual pixels to actual pixels. It has been found that these artefacts are in particular noticeable during animation (such as scrolling) of high contrast regions of frame data, such as those having hard edges. In this sense, the artefacts address by the methods disclosed herein are temporally variable, due to animation. An extreme example of image data that can create these temporally variable visual artefacts when animated is an overlay of fine, diagonal, black and white lines.

There are many possible specific implementations of the above-described methods, all of which are intended to be within the scope of this disclosure.

In embodiments, the one are more processors are controlled to produce frame data in which the contrast of said region is only adjusted during animation of said region. In embodiments, the adjustment of the contrast of said region is not applied when said region is not animated.

In embodiments, the adjustment of the contrast of said region is to reduce the contrast of said region. In embodiments, the reduction in the contrast is achieved by adapting the image data by one or more of: filtering; resampling; adjusting the opacity of said region; reducing the intensity of highlights in said region; increasing the intensity of the lowlights in said region; blurring the image in said region; smoothing the image in said region.

In embodiments, one or more of the processors monitor the frame data in real time and provide said indication. In embodiments, the one or more processors that monitor the frame data analyse the frame data to identify regions of the image to which a contrast adjustment should be applied and produce adjusted frame data accordingly. In embodiments, the one or more processors analyse the contrast of regions of the frame data to determine regions of the frame data being animated that may provide an undesirable visual artefact on a display. In this way, the adjustment of the contrast of regions of frame data to avoid visual artefacts can be performed on-line, preferably in real time, for example, by a graphical processing unit (GPU) of the electronic device. In embodiments, the method can be applied as a post processing filter to the existing software rendering pipeline at application level and/or at driver (Operating System software) level. Alternatively or in addition, the method could be applied as a dedicated step in the hardware rendering pipeline. Many other hardware and/or software implementations of the methods set out herein are possible and all are intended to form part of this disclosure.

In embodiments, the degree of the contrast adjustment applied is dependent on the nature of the animation the region of frame data is undergoing. For example, when an image containing high contrast regions is being scrolled more quickly, the visual artefacts would otherwise be more visible on the display and so the contrast of those regions is reduced by a greater degree than when the image is being scrolled more slowly, when said visual artefacts would otherwise normally be less apparent.

In embodiments, said indication for the region of frame data is provided by a process producing the image content contained in said region. In embodiments, a graphical user interface (GUI) widget or image data or a region thereof has associated with it said indication that the contrast of the frame data representing said widget should be adjusted during animation. In embodiments, said widget has said indication associated to it at the time of the design of the widget. In these ways, the processes running on said device that produce the frame data (such as GUI APIs that produce GUI widgets) can flag regions of frame data that should be subjected to contrast adjustment during animation. For example, a GUI widget having high contrast regions that would normally produce an undesirable visual effect on a display when dragged across the screen can be flagged (e.g. at the time of design or production of the widget) by the process producing the widget such that the frame data is contrast-adjusted during animation so as to avoid the artefacts. This allows image data for which the frame data should be contrast-adjusted during animation to be identified 'off-line', for example, at the time of the creation of the data.

In embodiments, the method may further comprise applying a mask to the frame data and applying a contrast adjustment process to the masked frame data. A method as claimed in any preceding claim, wherein the adjustment is applied to frame data stored in a frame buffer in real time.

In embodiments, an edge detector algorithm may be used to identify regions of frame data for which to provide said indication that the contrast of said region should be adjusted during animation. In embodiments, the edge detector algorithm may use one or more of: a Prewitt operator; a Sobell operator. In this way, regions of images to be displayed on a display which may otherwise cause undesirable visual artefacts can be identified.

In embodiments, the adjustment reduces the appearance of visual artefacts in the region of the displayed image data.

In embodiments, the present disclosure also provides a computer readable medium containing instructions to configure the one or more processors of an electronic device to operate in accordance with the methods set out above. In embodiments, the present disclosure also provides an electronic device having one or more processors and such a computer readable medium.

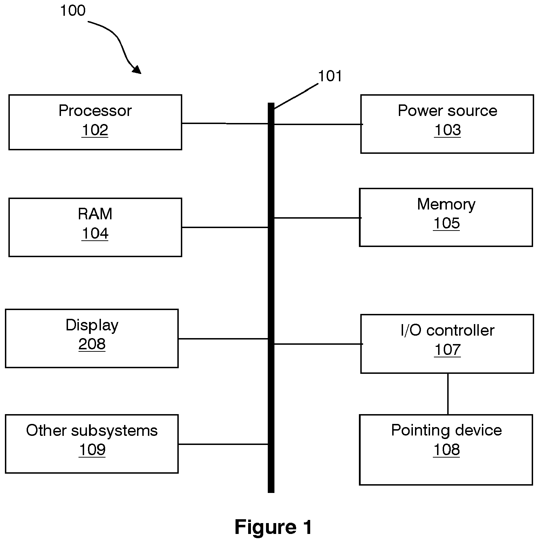

Embodiments of the present disclosure will now be described in more detail with reference to Figure 1 which is a block diagram illustrating an electronic device usable in accordance with the present disclosure. The disclosure generally relates to an electronic device having one or more processors and which is configured to produce frame data for display on a display which may be coupled to the device. The electronic device, in embodiments, may be a general purpose computer, static or portable. Examples of electronic devices include desktop computers, laptop computers, tablet computers, notebook computers, gaming console computers, all-in-one computers, graphics cards, display control units, mobile, handheld, wireless communication devices and so forth.

A block diagram of an example of an electronic device 100 usable in embodiments of the invention is shown in Figure 1. The electronic device 100 includes multiple components linked by a communications bus 101. A processor 102 controls the overall operation of the electronic device 100. One or more processors may be provided. A power source 103, such as one or more rechargeable batteries or a port to an external power supply, powers the electronic device 100.

The processor 102 interacts with other components of the electronic device including Random Access Memory (RAM) 104, memory 105, a display 106, and input/output controller 107 coupled to a pointing device 108 for user operation of the electronic device 100. Other device subsystems 109 may be provided to enable additional functionality and only the abovementioned components are described herein to sufficiently explain the disclosure.

The display screen 106 may integrated with or separate from but coupled to the device 100. The display screen 106 may be a TFT-LCD screen. In use the processor 102 is controlled to produce frame data for display on the display screen 106. The processor in use implements one or more programs stored in RAM 104 and memory 105 and responsive to those programs generates frame data to display on display 106 information such as text, images and icons and a graphical user interface (GUI) of programs and of an operating system. A degree of user-interaction with the displayed information and with the graphical user interface (GUI) of programs and of an operating system is enabled through user manipulation of the pointing device 108 which may, for example, be a touch-sensitive overlay on display 106. The touch-sensitive overlay may be of any suitable type, such as a capacitive, resistive, infrared, surface acoustic wave (SAW), optical, dispersive signal technology, acoustic pulse recognition, and so forth, as known in the art.

While carrying out the one or more programs, the processor 102 produces matrices of frame data to update display 106 with visual data. The frame data addresses pixels of display 106 with colour and intensity information to create an image on the display screen 106 usable by a user of the device, for example, to interact with the electronic device, to operate an operating system and/or one or more programs, watch media, surf the internet etc. By updating the frame data which may be stored in a frame buffer (not shown) and refreshing the display at a high frequency (for example above the response time of the eye) image data shown on the display can be perceived by users to be animated.

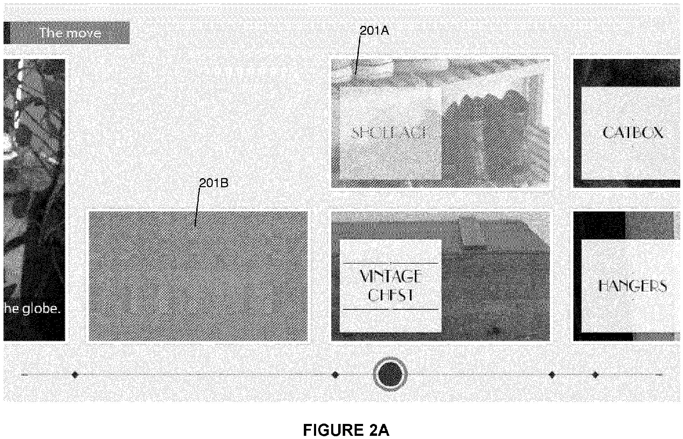

For example, as shown in Figure 2A, a user may operate pointing device 108 to scroll through multiple images contained in a window of a GUI. As seen in Figure 2A, two of these images 201A, B indicated as 'Shoerack' and 'Shopping List', have a series of fine, light and dark, diagonal lines as an overlay. The diagonal lines provide a high-contrast pattern that would normally produce flickering and moiré patterns on the display 106 when undergoing a scroll translation animation due to the response time of individual pixels of the display 106 and due to sampling issues. These undesirable artefacts are avoided by the processor 102 adjusting the contrast of the frame data corresponding to the regions of the image representing the images 201A, B responsive to animation of those regions of the image and an indication that the contrast of those regions should be adjusted during animation. The program or process that produces the window containing the images 201A, B may provide the indication that the contrast of regions corresponding to images 201A, B should be adjusted during animation to avoid artefacts (such indication may be flagged 'off-line' at the time of creation of the program or images 201A, B), and/or the processor 102 may analyse the frame data in real time 'on-line' to provide an indication of regions that should be subjected to an adjustment of contrast during animation.

The contrast adjustment may be to reduce the contrast of images 201A, B to the extent needed to avoid visual artefacts being perceptible to the viewer of the animated images 201A, B on display 106, and may be responsive to the animation that the images 201A, B are undergoing, such as the speed of scrolling, scaling, or any other animation. By animation it is meant the change of representation of a region of an image so as to achieve the coherent or incoherent movement or other change of that representation. Besides scrolling, animation is intended to include scaling, rotation, distortion and other manipulations of image data.

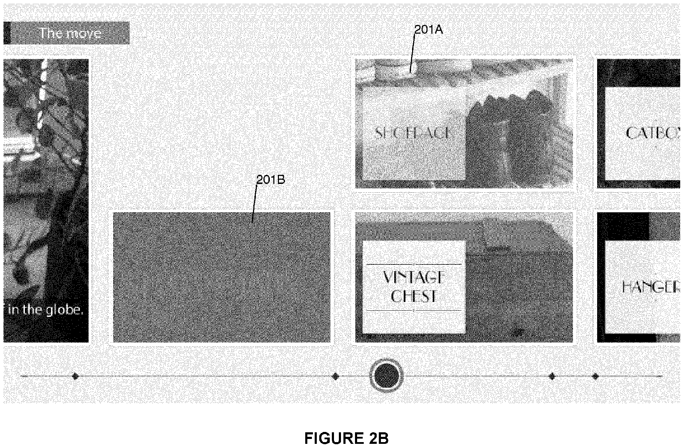

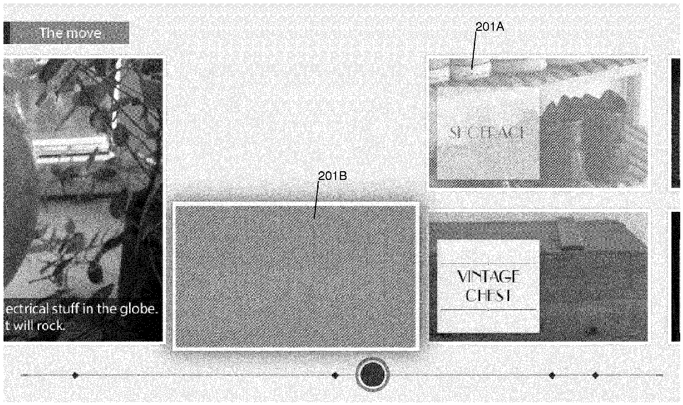

Referring to Figure 2B, it can be seen that the user of the device 100 has manipulated the pointing device 108 to scroll the contents of the window including images 201A, B to the right. Responsive to this animation and an indication (provided, for example, by the 'on-line' or 'off-line' methods described above) that the contrast of the frame data corresponding to regions representing images 201A, B should be adjusted, the processor 102 adjusts the frame data to reduce the contrast in these regions. This may be achieved, for example by reducing the opacity of the diagonal lines. This reduction in contrast is visible in Figure 2B. During animation, visual artefacts such as flickering of the diagonal lines and moiré patterns, that would otherwise have been visible to a viewer of display 106, are thus avoided.

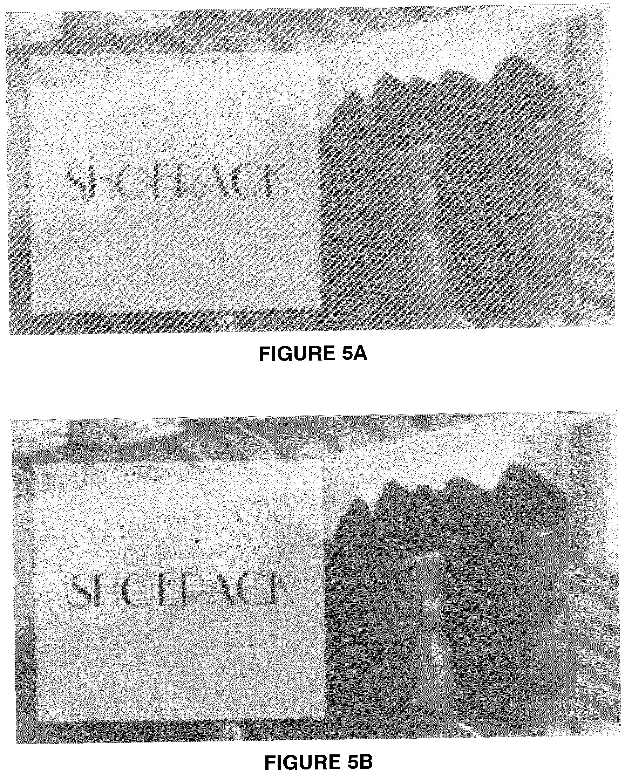

Figures 5A and 5B are provided as detailed views of Figures 2A and 2B, respectively, to more clearly illustrate the reduction in the contrast that is applied during the animation of the indicated region 201A.

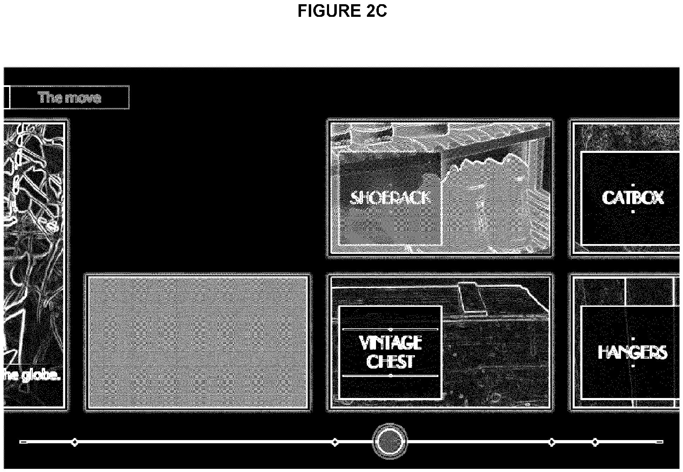

Referring to Figure 2C, on the ceasing of the scrolling by user, the processor 102 no longer adjusts the contrast of the frame data corresponding to regions representing images 201A, B, and thus the diagonal lines are once again more clearly visible.

To identify regions of image data that should be subjected to a contrast adjustment during animation, an appropriate signal processing algorithm can be used. The algorithm may employ an edge detector algorithm such as a Sobell operator or a Prewitt operator to identify high contrast regions that may otherwise produce undesirable visual effects. Further processing of the image data input/output from these edge detector algorithms may be used before providing an indication that the contrast of a given region should be adjusted. Figure 3 shows the application of an edge detector including a Sobell operator to Figure 2A. The high contrast regions in the overlaying images 201A, B are prominent in the output of the edge detector shown in Figure 3 as extensive white regions. The edge detector can detect the high contrast fine diagonal lines in the overlaying images 201A, B. This may be used to provide said indication to the processor 102 that the contrast of the produced frame data for images 201A, B should be adjusted during animation of images 201A, B. This indication may be provided during the 'on-line' or 'off-line' processes described above. The extent of the contrast adjustment to be applied to the indicated regions can be dependent on the nature and speed of the animation, the nature of the frame data, and can be set by an algorithm to the extent needed to avoid undesirable visual artefacts.

A mask, which may be a weighted mask may be applied to mask off the indicated regions of the frame data which are to be adjusted. The mask may be based on the output of a signal processing algorithm including an edge detector. The mask itself may represent the indication that an adjustment of contrast should be applied to a region of frame data. Once the mask has been applied to the data, a contrast adjustment may be applied to the regions showing through the mask to adjust the contrast and avoid visual artefacts on animation of those regions. The contrast adjustment processing can include one or more of: filtering; resampling; adjusting the opacity of said region; reducing the intensity of highlights in said region; increasing the intensity of the lowlights in said region; blurring the image in said region; smoothing the image in said region. The contrast adjustment processing can be applied in real time.

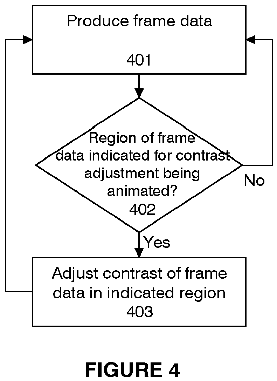

Figure 4 shows a flow diagram illustrating one method usable in the implementation of the present disclosure.

In step 401 the processor 102 produces frame data to be fed to display 106.

In step 402, the processor 102 checks to see whether any regions of the frame data indicated for contrast adjustment during animation are undergoing animation. This can be performed by a real time monitoring analysis of the frame data to determine indicated high contrast regions that are undergoing animation. If not, the process loops back to step 401. If yes, the process proceeds to step 403.

At step 403 the processor 102 adjusts the contrast of the frame data indicated in step 402, preferably by reducing the contrast of those regions to the extent needed to avoid visual artefacts being perceptible to a viewer of display 106. The process then loops back to step 401 and is preferably carried out in real time so as to effectively continually update the display 106.

The various embodiments presented above are merely examples and variations of the innovations described herein will be apparent to persons of ordinary skill in the art. As embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A method of controlling frame data to be fed to a display device, comprising:
controlling one or more processors of an electronic device to produce frame data in which the contrast of a region of the image represented by the frame data is adjusted responsive to:
• animation of that region of the image; and
• an indication that the contrast of the region should be adjusted during animation.

2. A method as claimed in claim 1, wherein the one are more processors are controlled to produce frame data in which the contrast of said region is only adjusted during animation of said region.

3. A method as claimed in claim 1 or 2, wherein when the adjustment of the contrast of said region is not applied when said region is not animated.

4. A method as claimed in claim 1, 2 or 3, wherein the adjustment of the contrast of said region is to reduce the contrast of said region, wherein optionally the reduction in the contrast is achieved by adapting the image data by one or more of: filtering; resampling; adjusting the opacity of said region; reducing the intensity of highlights in said region; increasing the intensity of the lowlights in said region; blurring the image in said region; smoothing the image in said region.

5. A method as claimed in any preceding claim, wherein one or more of the processors monitor the frame data in real time and provide said indication.

6. A method as claimed in claim 5, wherein the one or more processors that monitor the frame data analyse the frame data to identify regions of the image to which a contrast adjustment should be applied and produce adjusted frame data accordingly, wherein optionally the one or more processors analyse the contrast of regions of the frame data to determine regions of the frame data being animated that may provide an undesirable visual artefact on a display.

7. A method as claimed in any preceding claim, wherein the degree of the contrast adjustment applied is dependent on the nature of the animation the region of frame data is undergoing.

8. A method as claimed in any preceding claim, wherein said indication for the region of frame data is provided by a process producing the image content contained in said region.

9. A method as claimed in any preceding claim, wherein a graphical user interface widget or image data or a region thereof has associated with it said indication that the contrast of the frame data representing said widget should be adjusted during animation, wherein optionally said widget has said indication associated to it at the time of the design of the widget.

10. A method as claimed in any preceding claim, further comprising applying a mask to the frame data and applying a contrast adjustment process to the masked frame data.

11. A method as claimed in any preceding claim, wherein the adjustment is applied to frame data stored in a frame buffer in real time.

12. A method as claimed in any preceding claim, wherein an edge detector algorithm is used to identify regions of frame data for which to provide said indication that the contrast of said region should be adjusted during animation, wherein optionally the edge detector algorithm uses one or more of: a Prewitt operator; a Sobell operator.

13. A method as claimed in any preceding claim, wherein the adjustment reduces the appearance of visual artefacts in the region of the displayed image data.

14. A computer readable medium containing instructions to configure the one or more processors of an electronic device to operate in accordance with the method of any preceding claim.

15. An electronic device having one or more processors and computer readable medium as claimed in claim 14.
